# EUROPEAN PATENT APPLICATION

(11) **EP 4 645 998 A1**
(43) Date of publication of application: **05.11.2025**
(21) Application number: 22969841.0
(22) Date of filing: 30.12.2022
(51) Int. Cl.: H04W 72/51

(54) **TERMINAL CAPABILITY REPORTING METHOD AND APPARATUS, AND DEVICE AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/144203
(87) International publication number: WO 2024/138699

(57) **Abstract**

The present disclosure relates to a terminal capability reporting method and apparatus, and a device and a storage medium. The method comprises: sending terminal capability information to a network device, wherein the terminal capability information is used for describing the capability of a terminal reporting power domain information, and the power domain information is used for describing information that is related to a terminal power and is based on specific absorption rate (SAR) or maximum power exposure (MPE) requirements. Terminal capability information is reported to a network device, such that a network implements better scheduling, and the method is more suitable for scheduling for service sending requirements. Furthermore, the system throughput and the user coverage are increased, thereby facilitating an improvement in the system efficiency and a reduction in invalid scheduling of the network device, and also facilitating a reduction in unnecessary electricity consumption for a terminal.

## Description

### TECHNICAL FIELD

The present disclosure relates to the field of communication technology, and in particular to a method, an apparatus, a device for reporting terminal capability, and a storage medium.

### BACKGROUND

For terminals with dual power amplifiers (PA) that support carrier aggregation (CA)/dual connectivity (DC), the PA capabilities of the terminal on different frequency bands can be different. The maximum transmit power of the terminal will be affected by the power class (PC) defined by the terminal.

In current communication research, uplink coverage has always been one of the bottlenecks of system performance, which will affect signal quality and user experience. Practitioners including operators have a strong demand for uplink coverage enhancement. Currently, in the uplink CA/DC of new radio (NR), terminals may have band combinations (BC). That is, one band supports a certain power class, while another band may support another power class. The maximum transmit power defined on the BC will be affected by the power class of the terminal defined on the BC.

When the terminal actually performs uplink transmission, the terminal is subject to some radio frequency (RF) exposure requirements, the actual transmit power will also be affected, and there may be certain transmit power fluctuations or interruptions. However, the terminal is transparent to the network device during the implementation process, and the network device is not aware of the reasons for the fluctuations or interruptions in the terminal's transmit power. Also, changes in the terminal's transmit power will also affect the scheduling of the network device to a certain extent.

Therefore, how to enable the network device to obtain the power-related information of the terminal is a problem to be solved at present.

### SUMMARY

In order to overcome the problems existing in the related art, the present disclosure provides a method, an apparatus, a device for reporting terminal capability, and a storage medium.

According to the first aspect of embodiments of the present disclosure, a terminal capability reporting method is provided, which is applied to a terminal and includes: sending terminal capability information to a network device, where the terminal capability information is used for indicating capability of the terminal to report power domain information, and the power domain information is used for indicating information related to terminal power based on requirement of specific absorption rate SAR or maximum power exposure MPE.

According to the second aspect of embodiments of the present disclosure, a terminal capability reporting method is provided, which is applied to a network device and includes: receiving terminal capability information sent by a terminal, where the terminal capability information is used for indicating capability of the terminal to report power domain information, and the power domain information is used for indicating information related to terminal power based on requirement of specific absorption rate SAR or maximum power exposure MPE.

According to the third aspect of embodiments of the present disclosure, a terminal capability reporting apparatus is provided, which is configured at a terminal and includes: a sending module, configured to send terminal capability information to a network device, where the terminal capability information is used for indicating capability of the terminal to report power domain information, and the power domain information is used for indicating information related to terminal power based on requirement of specific absorption rate SAR or maximum power exposure MPE.

According to the fourth aspect of embodiments of the present disclosure, a terminal capability reporting apparatus is provided, which is configured at a network device and includes: a receiving module, configured to receive terminal capability information sent by a terminal, where the terminal capability information is used for indicating capability of the terminal to report power domain information, and the power domain information is used for indicating information related to terminal power based on requirement of specific absorption rate SAR or maximum power exposure MPE.

According to the fifth aspect of embodiments of the present disclosure, a terminal capability reporting device is provided and includes: a processor; and a memory for storing instructions executable by the processor; where the processor is configured to implement the method according to the first aspect and any embodiment thereof.

According to the sixth aspect of embodiments of the present disclosure, a terminal capability reporting device is provided and includes: a processor; and a memory for storing instructions executable by the processor; where the processor is configured to implement the method according to the second aspect and any embodiment thereof.

According to the seventh aspect of embodiments of the present disclosure, a non-transitory computer-readable storage medium is provided, where instructions in the storage medium, upon being executed by a processor of a terminal, cause the terminal to implement the method according to the first aspect and any embodiment thereof.

According to the eighth aspect of embodiments of the present disclosure, a non-transitory computer-readable storage medium is provided, where instructions in the storage medium, upon being executed by a processor of a network device, cause the network device to implement the method according to the second aspect and any embodiment thereof.

The technical solution according to some embodiments of the present disclosure may include the following beneficial effects. By reporting the terminal capability information to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram of a wireless communication system according to an exemplary embodiment.
FIG. 2 is a schematic diagram of a terminal accumulated transmit power control according to an exemplary embodiment.
FIG. 3 is a schematic diagram of another terminal accumulated transmit power control according to an exemplary embodiment.
FIG. 4 is a schematic diagram of yet another terminal accumulated transmit power control according to an exemplary embodiment.
FIG. 5 is a schematic diagram of still another terminal accumulated transmit power control according to an exemplary embodiment.
FIG. 6 is a schematic diagram of a single-carrier PHR format according to an exemplary embodiment.
FIG. 7 is a schematic diagram of a multi-carrier PHR format according to an exemplary embodiment.
FIG. 8 is a flow chart of a terminal capability reporting method according to an exemplary embodiment.
FIG. 9 is a flow chart of another terminal capability reporting method according to an exemplary embodiment.
FIG. 10 is a schematic diagram of a terminal capability reporting apparatus according to an exemplary embodiment.
FIG. 11 is a schematic diagram of another terminal capability reporting apparatus according to an exemplary embodiment.
FIG. 12 is a schematic diagram of a terminal capability reporting device according to an exemplary embodiment.
FIG. 13 is a schematic diagram of another terminal capability reporting device according to an exemplary embodiment.

### DETAILED DESCRIPTION

Here, exemplary embodiments will be described in detail, examples of which are shown in the accompanying drawings. When the following description refers to the drawings, unless otherwise indicated, the same numbers in different drawings represent the same or similar elements. The implementations described in the following exemplary embodiments do not represent all implementations consistent with the present disclosure.

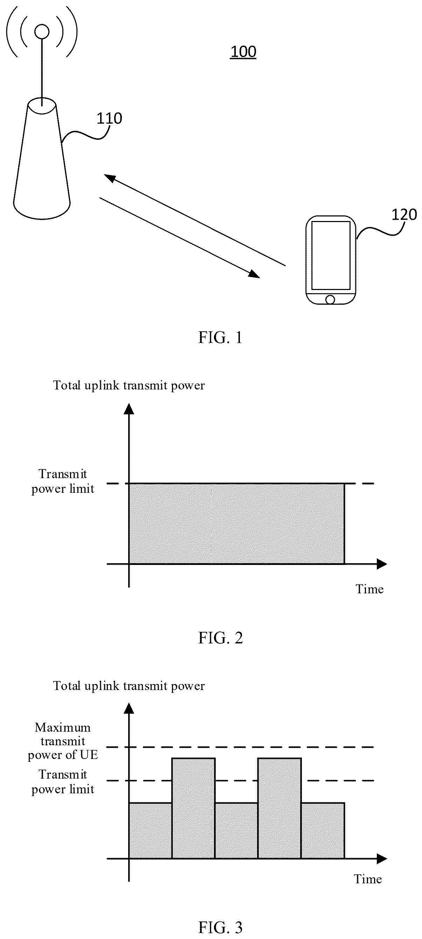

The communication method involved in the present disclosure can be applied to the wireless communication system 100 shown in FIG. 1. The network system may include a network device 110 and a terminal 120. It can be understood that the wireless communication system shown in FIG. 1 is only for schematic illustration, and the wireless communication system may also include other network devices, for example, core network devices, wireless relay devices, and wireless backhaul devices, which are not shown in FIG. 1. The embodiments of the present disclosure do not limit the number of network devices and the number of terminals included in the wireless communication system.

It can be further understood that the wireless communication system according to some embodiments of the present disclosure is a network that provides wireless communication functions. The wireless communication system can adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), and Carrier Sense Multiple Access with Collision Avoidance. According to the capacity, rate, delay and other factors of different networks, networks can be divided into 2G (Generation) networks, 3G networks, 4G networks or future evolved networks, such as the 5th Generation Wireless Communication System (5G) network. 5G networks can also be called New Radio (NR). For the convenience of description, the present disclosure sometimes refers to wireless communication networks as networks.

Furthermore, the network device 110 involved in the present disclosure may also be referred to as a wireless access network device. The wireless access network device may be: a base station, an evolved Node B (eNB), a home base station, an access point (AP) in the wireless fidelity (WIFI) system, a wireless relay node, a wireless backhaul node, a transmission point (TP), a transmission and receiving point (TRP), or the like. It may also be a gNB in the NR system, or it may also be a component or a part of a device constituting a base station, or the like. When a vehicle-to-everything (V2X) communication system is involved, the network device may also be a vehicle-mounted device. It should be understood that in the embodiments of the present disclosure, the specific technology and specific device form adopted by the network device are not limited.

Furthermore, the terminal 120 involved in the present disclosure may also be referred to as a terminal device, a user equipment (UE), a mobile station (MS), a mobile terminal (MT), or the like, which is a device that provides voice and/or data connectivity to users. For example, the terminal may be a handheld device or a vehicle-mounted device with a wireless connection function, or the like. At present, some examples of terminals include: a smart phone (mobile phone), a pocket personal computer (PPC), a handheld computer, a personal digital assistant (PDA), a laptop computer, a tablet computer, a wearable device, a vehicle-mounted device, or the like. In addition, when the vehicle-to-everything (V2X) communication system is involved, the terminal device may also be a vehicle-mounted device. It should be understood that the embodiments of the present disclosure do not limit the specific technology and specific device form adopted by the terminal.

In some embodiments of the present disclosure, the network device 110 and the terminal 120 may use any feasible wireless communication technology to achieve mutual data transmission. Here, the transmission channel corresponding to the data or control information sent by the network device 110 to the terminal 120 is called a downlink channel (downlink, DL), and the transmission channel corresponding to the data or control information sent by the terminal 120 to the network device 110 is called an uplink channel (uplink, UL). It can be understood that the network device involved in the embodiments of the present disclosure may be a base station. Alternatively, the network device may also be any other possible network device, and the terminal may be any possible terminal, which is not limited by the present disclosure.

Currently, in release (R) 17, the terminal can be enhanced to achieve higher transmit power under CA/DC (carrier aggregation/dual connection). For terminals with dual PAs (power amplifiers), CA/DC can be supported. For example, when the terminal power class is defined as PC2, the PA capabilities of terminal on different bands can be different. For example, the terminal power configuration is shown in Table 1.

**Table 1**

| | terminal power class | power class of network carrier X | power class of network carrier Y |
|---|---|---|---|
| combination a | 26dBm | 23dBm | 23dBm |
| combination b | 26dBm | 23dBm | 26dBm |
| combination c | 26dBm | 26dBm | 23dBm |
| combination d | 26dBm | 26dBm | 26dBm |

Here, carrier X and carrier Y are used for indicating different bands. It can be seen from Table 1 that if the power class of the terminal on one frequency band is limited to 23 decibel milliwatts (dBm), and the power class on another frequency band is also limited to 23dBm, the power class of the terminal is limited to a maximum of 26dBm. For example, in the case of combination b and combination c, when the power class of the terminal on one frequency band is limited to 23dBm and the power class on another frequency band is limited to 26dBm, the power class of the terminal is limited to a maximum of 26dBm due to relevant protocol regulations. For the case of combination d, it is also limited to a maximum of 26dBm due to relevant protocol regulations. In other words, the maximum transmit power of the terminal will be limited to the terminal power class specified in the protocol. In the Release 17 work item (WI) on increasing the maximum terminal power for CA/DC, for a band combination where one band supports power class up to PC3 (23 dBm) and the other band supports power class up to PC2 (26 dBm), it can be assumed that the total power associated with the band combination is the sum of the respective power classes.

Since the relevant protocols specify the power class of the terminal, a new capability signaling is introduced for each frequency band combination in some schemes. That is, a new maximum output power (MOP) capability signaling is introduced for this relaxed signal support. For example, the signaling can be HigherPowerLimitCADC. This signaling can be applicable to terminals in CA scenarios where the power class sent in one frequency band supports PC3 and the power class sent in another frequency band supports PC2. The frequency band can, for example, be a frequency band using time division duplexing (TDD) or frequency division duplexing (FDD). The terminal can use the new MOP capability and use the full power from the two PAs corresponding to the maximum composite power of 27.8dBm. In comparison, the terminal in R16 will be limited to PC2 in the CA/DC configuration.

In some technologies, the key to achieving simultaneous transmission across multiple frequency bands is that the terminal needs to comply with the corresponding regulatory constraints when participating in uplink transmission. Regulatory constraints on the total radio frequency (RF) exposure experienced by users require the terminal to determine a safe transmit power class for each frequency band, i.e., the RF exposure level. When the terminal approaches or exceeds the allowed RF exposure level, the terminal is to recalculate the safe transmit power for each frequency band in use, and the uplink transmission will also be subject to a change in transmit power. Alternatively, in some cases, the terminal can set its transmit power to have a fixed limit so that the terminal never exceeds the RF exposure level limit.

However, the changes in the terminal's transmit power are transparent to the network device, that is, the network device is not aware of the reasons for the terminal's change in transmit power, thereby affecting the network device's perception of link quality and link adaptation, and subsequently causing fluctuations in uplink throughput. Accordingly, allowing the network device to better understand these constraints and their impact on terminal behavior can help network device adopt more detailed and accurate scheduling decisions.

Two types of RF exposure level limit indicators can be used according to different combinations of frequency bands. For example, in one type, the specific absorption rate (SAR) can be used as a metric, which is mainly applicable to frequency bands below 6 GHz, such as frequency range (FR) 1. In the other type, the power density (PD) can be measured and the maximum power exposure (MPE) can be calculated as a metric, which type of standard is mainly used in millimeter wave bands, such as FR2. The above indicators all use a time-averaged method to limit RF exposure. That is, the average RF exposure measured through the above indicators must be kept below a specific threshold within a specific event window. However, it is understandable that the protocol specifies the average RF exposure, not the instantaneous RF exposure. Also, there may be some exceptions in specific areas. The time-averaged nature of the above constraints is a very important aspect when high-power transmission is achieved at the terminal. This shows that although it is impossible for the terminal to always transmit at full power on all frequency bands, the terminal can transmit using a higher transmit power for a short time.

When the terminal is performing uplink transmission, it will determine, during the initial stage of access, the maximum uplink transmission cycle (max UL duty cycle), i.e., the maximum UL duty cycle, that the terminal can support within the uplink evaluation period according to the SAR/MPE requirements, and report maxUplinkDutyCycle to the network device. After the communication connection is established with the network device, the network device will perform specific configuration for the terminal according to the maximum uplink duty cycle reported by the terminal, that is, the maximum uplink duty cycle value used in subsequent transmissions, recorded as maxULdutycycle or maxUplinkDutyCycle. During the uplink evaluation period, the terminal controls the actual uplink transmission according to the transmission symbol proportion corresponding to the maximum uplink duty cycle configured by the network device. However, the resulting adjustment is transparent to the network device. At the same time, since the relevant regulations of some countries/regions may stipulate mandatory radiation exposure requirements of SAR/MPE for terminals in different frequency bands, the terminal is to meet the transmission UL duty cycle requirements through actual transmission during the uplink evaluation period to meet the requirements of SAR/MPE.

For example, FIG. 2 shows a schematic diagram of a cumulative transmit power control of a terminal. It can be seen that the gray area shows that the total transmit power of the terminal in a UL duty cycle is to meet the transmit power limit. It can be understood that the transmit power limit is the power limit determined on the carrier/cell for meeting the SAR/MPE requirements, such as 23dBm. It can be understood that the power limit can be an SAR limit or an MPE limit. In FIG. 2, the terminal maintains an average transmit power within the UL duty cycle to meet the transmit power limit.

In fact, in some transmission time slots, the transmit power of the terminal can be lower than the transmit power limit, while in other transmission time slots, the transmit power of the terminal can be higher than the transmit power limit, as shown in FIG. 3. As can be seen from FIG. 3, the terminal is to ensure that the average transmit power on the uplink transmission symbol corresponding to the actual UL duty cycle (proportion) in the uplink evaluation period does not exceed the transmit power limit. Alternatively, although the instantaneous transmit power of a time slot can exceed the transmit power limit, it still needs to meet the maximum transmit power requirement of the terminal, that is, it cannot exceed the maximum transmit power of the terminal.

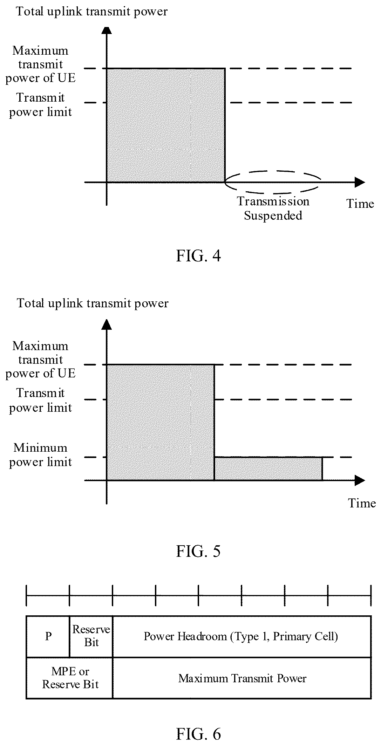

In some cases, as shown in FIG. 4, the terminal may use the maximum transmit power to send uplink data in some time slots. In order to ensure that the average transmit power on the uplink transmission symbol corresponding to the actual UL duty cycle (proportion) in the uplink evaluation period meets the transmit power limit requirement, the terminal will not be able to send uplink data in the subsequent transmission time, that is, the terminal suspends transmission during this period. Even if the terminal may have the need to send data during this period, the terminal cannot continue to send data.

In other cases, as shown in FIG. 5, after the terminal uses the maximum transmit power to send uplink data in certain time slots, in order to ensure that the average transmit power on the uplink transmission symbol corresponding to the actual UL duty cycle (proportion) meets the transmit power limit requirement in the subsequent transmission time, the terminal can only use the minimum power to send uplink data. The minimum transmit power can also be called the minimum transmit power limit, which means the minimum transmit power for the terminal to send uplink data. If the transmit power is lower than the minimum transmit power limit, the terminal cannot send uplink data, that is, it suspends transmission.

According to some specifications, the terminal can use maxUplinkDutyCycle to avoid non-CA SAR/MPE problems for high power user equipment (HPUE). For CA situations, this problem can be avoided by UE implementation.

Currently, some protocols provide duty cycle configuration. For FR1, maxUplinkDutyCycle-PC2-FR1 ENUMERATED {n60,n70,n80,n90,n100}OPTIONAL]] indicates the maxUplinkDutyCycle of the power class PC2 in FR1, where the proportion of uplink symbols may be 60%, 70%, 80%, 90% or 100%.

For FR2, maxUplinkDutyCycle-FR2 ENUMERATED{n15,n20,n25,n30,n40, n50,n60,n70,n80,n90,n100}OPTIONAL]] indicates maxUplinkDutyCycle in FR2, where the proportion of uplink symbols may be 5%, 20%, 25%, 30%, 40%, 50%, 60%, 70%, 80%, 90% or 100%.

According to the radio access network (RAN) 4 specification, for example, for a PC2 (26dBm) terminal, the probability of the transmit power being higher than the default transmit power (23dBm) and the actual transmit power in a frequency band depend on the terminal implementation, ensuring that the maximum UL duty cycle (proportion) is not exceeded and the SAR/MPE requirements are met within the uplink evaluation period. When the maximum UL duty cycle (proportion) is not exceeded within the uplink evaluation period, the maximum 26dBm can be used for transmission. However, if the maximum UL duty cycle (proportion) is exceeded for the transmission during the uplink evaluation period, the terminal transmit power class is to fall back to PC3, i.e. 23dBm, during the subsequent transmission time. According to the RAN4 specification in R17, the maximum transmit power of inter-band CA and inter-band evolution-universal terrestrial radio access network new radio dual connectivity (EN-DC) can be the sum of the maximum output power values of the aggregated bands, and also depends on similar conditions as the probability of being higher than the default transmit power (23dBm) in the band, that is, it depends on the terminal implementation to ensure that the SAR/MPE requirements are met by the uplink transmission symbols within the uplink evaluation period without exceeding the maximum UL duty cycle (proportion).

Considering that the actual uplink transmission controlled by the terminal can change based on the terminal implementation, and these operations are transparent to the network device. Therefore, the terminal can report to the network device the instantaneous transmit power of the physical uplink shared channel (PUSCH) transmission. For example, the network device is reported by means of a power headroom report (PHR). The PHR may include power headroom (PH), maximum transmit power P_{CMAX,f,c} and power-maximum power reduction (P-MPR). Here, the power headroom reflects the amount of additional transmit power that the terminal can deliver with reference to the current PUSCH power level, P_{CMAX,f,c} reflects the maximum power that the terminal can deliver in this case, and the current protocol stipulates that P-MPR only reports for the FR2 band. It can be understood that PHR provides an instantaneous snapshot for reporting to the network device a parameter set of specific PUSCH transmissions.

For example, FIG. 6 shows the currently specified PHR configuration format for a single carrier. In this format, the P indication field is used to indicate whether there is MPE; the reserved bit can be recorded as R. It can be understood that the reserved bit usually does not contain any information and is mainly used to record the corresponding newly added data when necessary. The power headroom is the above-mentioned PH, where in the case of a single carrier, the PH information corresponds to the PUSCH of the terminal, that is, type 1. At the same time, the PH is the PH corresponding to the primary cell (PCell). MPE or reserved bit indicates that this field can be MPE related information or a reserved bit. The MPE related information is used to record P-MPR in the case of FR2.

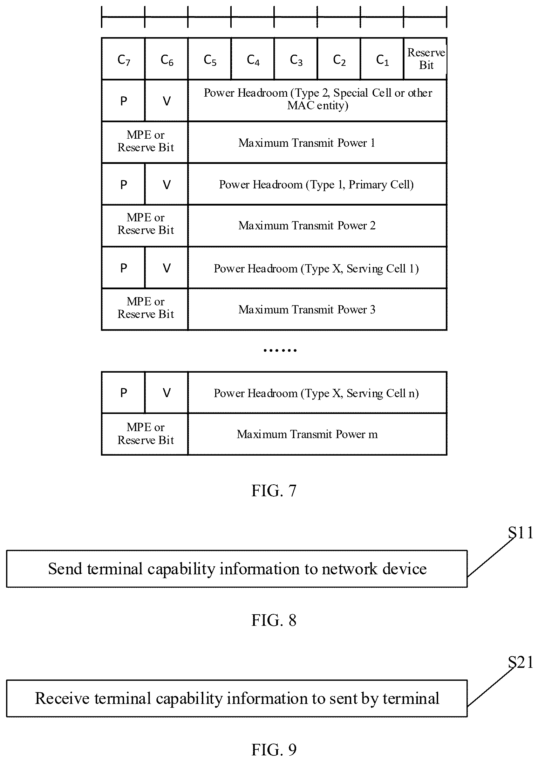

As another example, FIG. 7 shows the PHR configuration format in a multi-carrier case. In this format, C1 to C7 can be used to indicate the PHR corresponding to different carriers respectively. It can be understood that the multi-carrier PHR can be regarded as a combination of multiple single-carrier PHRs. Type 2 may correspond to the physical uplink control channel (PUCCH), and the special cell (SpCell) may include a PCell and a primary secondary cell (PSCell). The service cell may be a PCell or a secondary cell (SCell), a PSCell, a SpCell, or the like.

Although the PHR report enables the network device to know some power status of terminals, the network device still does not know the reason why the actual uplink transmission changes due to the SAR/MPE requirements of the terminals.

The time-varying nature of RF exposure has led to the introduction of a new mechanism for the terminal to report the time-varying transmit power availability to the network device. In some schemes, the terminal can periodically report the available energy to the network device, which can be achieved by sending an energy headroom report (EHR) or energy availability report (EAR) along with the PHR or independently. For different component carriers (CCs), the terminal may perform uplink transmissions with different transmit power limits. The uplink transmission capacity for the remaining time in the evaluation period window is determined by the power accumulated before the time slot of PHR report within the transmission symbol proportion corresponding to the actual transmission UL duty cycle in the uplink evaluation period. This report can support the network device to be aware of the impact of the terminal's subsequent transmission due to SAR/MPE requirements in a newly defined manner.

In the research requirements of R18, uplink coverage has always been one of the bottlenecks of system performance, which will affect signal quality and user experience. Practitioners, including operators, have strong demand for uplink coverage enhancement. In the research of R18 coverage enhancement (CE), the enhancement of power domain is an issue worth exploring, which has the most direct effect on improving coverage and spectral efficiency (SE).

In NR uplink CA/DC, the maximum transmit power defined on BC is limited by the terminal transmit power class defined on the BC. The RAN4 enhancement of R17 supports HPUE to better utilize the terminal's independent PA to achieve higher transmit power, mainly enhancing the PC2+PC3 configuration.

When the terminal is performing actual uplink transmission, FR1 is limited by SAR, and FR2 is limited by MPE requirements, so the actual transmit power will be limited. Transmit power adjustment based on SAR/MPE requirements may also cause large fluctuations or interruptions in transmit power. Based on the RAN4 protocol, the terminal defines this type of implementation as transparent to network devices. However, these power limitations, adjustments, and whether HPUE can achieve high-power transmission have a great impact on network device scheduling, and may directly affect the actual effect of R17 enhancements deployed in network devices. Allowing network devices to know the power-related information of the terminal and understand the corresponding behavior of the terminal can support better scheduling decisions for network devices.

Accordingly, how to enable the network device to obtain the power-related information of the terminal is a problem that is to be solved. It can be understood that the problem involved in the present disclosure is not limited to CA/DC of NR-UL.

Therefore, the terminal capability information is reported to the network device according to the present disclosure, which is conducive to the network to achieve better scheduling which is more suitable for service transmission requirements, thereby improving the system throughput and user coverage, improving the system efficiency, reducing ineffective scheduling of the network device, and saving unnecessary power consumption for the terminal.

FIG. 8 is a flow chart of a terminal capability reporting method according to an exemplary embodiment. As shown in FIG. 8, the method can be applied to a terminal. The terminal can be a terminal applicable to R18. The method may include the following steps.

In step S11, terminal capability information is sent to a network device.

In an embodiment, the terminal may send the terminal capability information to the network device, where the terminal capability information is used for indicating the capability of the terminal to report power domain information, and the power domain information is used for indicating information related to terminal power based on SAR or MPE requirements.

In other words, the terminal can report the terminal capability of the enhanced terminal uplink power domain information to the network device, so that the network device can timely and accurately understand whether different terminals have the capability of reporting the enhanced terminal uplink power domain information and/or what corresponding capabilities they have.

According to the present disclosure, by reporting the terminal capability information to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the terminal capability information includes at least one of the following: capability to enhance reporting of maximum power reduction (MPR) information based on the SAR in FR1; capability to enhance reporting of MPR information based on the MPE in FR2; capability to enhance reporting of power class information change of the terminal; capability to report power headroom information within an uplink UL duty cycle; capability to report update of maxUplinkDutyCycle information; capability of maximum number of carriers or number of terminal headroom reports supported by reporting of the power domain information; capability of measuring and reporting on multiple downlink carriers supported by reporting of the power domain information; capability of a measurement mode corresponding to reporting of the power domain information; capability of an enhanced power information type supported by reporting of the power domain information.

In some embodiments, the terminal capability information may include the capability to enhance reporting of SAR-based MPR information in FR1.

For example, the terminal capability information may indicate the terminal's capability to perform enhanced reporting based on MPR information of SAR in FR1. It is understandable that through the terminal capability information, the network device can understand whether the terminal can perform enhanced reporting based on the MPR information of SAR in FR1.

It can be understood that the SAR-based MPR information may be SAR-based MPR power reduction value information, that is, information indicating the power reduction situation under the SAR requirement of FR1.

In some embodiments, the terminal capability information may include the capability to enhance reporting of MPE-based MPR information in FR2.

For example, the terminal capability information may indicate the terminal's capability of performing enhanced reporting based on MPR information of MPE in FR2. It is understandable that through the terminal capability information, the network device can understand whether the terminal can perform enhanced reporting based on the MPR information of MPE in FR2.

It can be understood that the MPE-based MPR information may be MPE-based MPR power reduction value information, that is, information indicating the power reduction situation under the MPE requirement of FR2.

In some embodiments, the terminal capability information may include the capability to enhance reporting of changes in power class information of the terminal.

For example, the terminal capability information may be the capability to enhance reporting of changes in power class information of the terminal. It can be understood that through the terminal capability information, the network device can understand whether the terminal can enhance reporting of changes in power class information of the terminal.

In some embodiments, the terminal capability information may include the capability to report power headroom information within a UL duty cycle.

For example, the terminal capability information may be the capability to report the power headroom information within the UL duty cycle. It can be understood that through the terminal capability information, the network device can understand whether the terminal can report the power headroom information within the UL duty cycle.

In some embodiments, the power headroom information within the UL duty cycle can be expressed as information related to the remaining power within the proportion of transmission symbols corresponding to the actual transmission UL duty cycle in the uplink evaluation period.

In some embodiments, the terminal capability information may include the capability to report update of the maxUplinkDutyCycle information.

For example, the terminal capability information may be the capability to report update of the maxUplinkDutyCycle information. It can be understood that, through the terminal capability information, the network device can understand whether the terminal can report update of the maxUplinkDutyCycle information.

In some embodiments, update of the maxUplinkDutyCycle information may be a change in the prediction or configuration of the UL duty cycle by the terminal. For example, the uplink evaluation period corresponding to the actual UL duty cycle within the uplink evaluation period may change. Alternatively, the proportion of uplink transmission symbols of the actual UL duty cycle within the uplink evaluation period may change.

In some embodiments, the terminal capability information may include the capability of maximum number of carriers or number of terminal headroom reports supported by reporting of the power domain information.

For example, the terminal capability information may be the capability of maximum number of carriers or number of terminal headroom reports supported by reporting of the power domain information. It can be understood that through the terminal capability information, the network device can understand the maximum number of carriers or the number of terminal headroom reports supported by the power domain information reported by the terminal.

In some embodiments, the terminal capability information may include the capability of measuring and reporting on multiple downlink carriers supported by reporting of the power domain information.

For example, the terminal capability information may be the capability of measuring and reporting on multiple downlink carriers supported by reporting of the power domain information. It can be understood that through the terminal capability information, the network device can understand whether the power domain information reported by the terminal supports measurement and reporting for multiple downlink carriers.

For example, some power domain information may support measurement and reporting for multiple downlink carriers, while other power domain information may not support measurement and reporting for multiple downlink carriers.

In some embodiments, the terminal capability information may include the capability of a measurement mode corresponding to reporting of the power domain information.

For example, the terminal capability information may be the capability of the measurement mode corresponding to reporting of the power domain information. It can be understood that, through the terminal capability information, the network device can understand which measurement mode(s) corresponds to the power domain information reported by the terminal.

In some embodiments, the terminal capability information may include the capability of an enhanced power information type supported by reporting of the power domain information.

For example, the terminal capability information may be the capability of the enhanced power information type supported by reporting of the power domain information. It can be understood that, through the terminal capability information, the network device can understand which enhanced power information type(s) is supported by the power domain information reported by the terminal.

In some embodiments, the terminal capability information may include any two, three, four, five, six, seven, eight or nine of the above items. For example, the terminal capability information may include the capability to enhance reporting of MPR information based on the SAR in FR1 and the capability to enhance reporting of MPR information based on the MPE in FR2; or the capability to enhance reporting of MPR information based on the SAR in FR1 and the capability to report power headroom information within the UL duty cycle; or the capability to enhance reporting of MPR information based on the SAR in FR1, the capability to enhance reporting of MPR information based on the MPE in FR2, and the capability of maximum number of carriers or number of terminal headroom reports supported by reporting of the power domain information; or the capability to enhance reporting of MPR information based on the SAR in FR1, the capability to enhance reporting of power class information change of the terminal, the capability of measuring and reporting on multiple downlink carriers supported by reporting of the power domain information, and the capability of the measurement mode corresponding to reporting of the power domain information; or the capability to enhance reporting of MPR information based on the SAR in FR1, the capability to enhance reporting of power class information change of the terminal, the capability to report update of maxUplinkDutyCycle information, the capability of maximum number of carriers or number of terminal headroom reports supported by reporting of the power domain information, and the capability of the enhanced power information type supported by reporting of the power domain information; or the capability to enhance reporting of MPR information based on the SAR in FR1, the capability to enhance reporting of MPR information based on the MPE in FR2, the capability to enhance reporting of power class information change of the terminal, the capability to report power headroom information within the UL duty cycle, the capability of maximum number of carriers or number of terminal headroom reports supported by reporting of the power domain information, and the capability of the enhanced power information type supported by reporting of the power domain information; or the capability to enhance reporting of MPR information based on the SAR in FR1, the capability to enhance reporting of MPR information based on the MPE in FR2, the capability to report power headroom information within the UL duty cycle, the capability to report update of maxUplinkDutyCycle information, the capability of maximum number of carriers or number of terminal headroom reports supported by reporting of the power domain information, the capability of measuring and reporting on multiple downlink carriers supported by reporting of the power domain information, and the capability of the enhanced power information type supported by reporting of the power domain information; or the capability to enhance reporting of MPR information based on the SAR in FR1, the capability to enhance reporting of MPR information based on the MPE in FR2, the capability to enhance reporting of power class information change of the terminal, the capability to report power headroom information within the UL duty cycle, the capability to report update of maxUplinkDutyCycle information, the capability of maximum number of carriers or number of terminal headroom reports supported by reporting of the power domain information, the capability of measuring and reporting on multiple downlink carriers supported by reporting of the power domain information, and the capability of the enhanced power information type supported by reporting of the power domain information; or the capability to enhance reporting of MPR information based on the SAR in FR1, the capability to enhance reporting of MPR information based on the MPE in FR2, the capability to enhance reporting of power class information change of the terminal, the capability to report power headroom information within the UL duty cycle, the capability to report update of maxUplinkDutyCycle information, the capability of maximum number of carriers or number of terminal headroom reports supported by reporting of the power domain information, the capability of measuring and reporting on multiple downlink carriers supported by reporting of the power domain information, the capability of the measurement mode corresponding to reporting of the power domain information, and the capability of the enhanced power information type supported by reporting of the power domain information.

It is understandable that the terminal capability information may also include any two, three, four, five, six, seven or eight of the above items, which are not listed one by one in the present disclosure. For the convenience of description, the present disclosure will not elaborate on them here.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, in response to the terminal capability information being the capability of maximum number of carriers or number of terminal headroom reports supported by reporting of the power domain information, the terminal capability information also includes at least one of the following: in response to the reporting of the power domain information being reporting of a power headroom report (PHR), the terminal capability information is capability of a supported number of PHR reports or a maximum number of PHR reports; and in response to the reporting of the power domain information being reporting of an energy headroom report (EHR), the terminal capability information is capability of a supported number of EHR reports or a maximum number of EHR reports.

In some embodiments, in response to the terminal capability information being the capability of maximum number of carriers or number of terminal headroom reports supported by reporting of the power domain information, and in response to the reporting of the power domain information being reporting of PHR, the terminal capability information is the capability of the supported number of PHR reports or the maximum number of PHR reports.

For example, the terminal capability information may be the capability of maximum number of carriers or number of terminal headroom reports supported by reporting of the power domain information. In the case where the reporting of the power domain information is reporting of PHR, the terminal capability information may be the capability of the supported number of PHR reports or the maximum number of PHR reports. In other words, for PHR reporting, the terminal capability information may be the capability of the supported number of PHR reports or the maximum number of PHR reports.

In some embodiments, in response to the terminal capability information being the capability of maximum number of carriers or number of terminal headroom reports supported by reporting of the power domain information, and in response to the reporting of the power domain information being reporting of EHR, the terminal capability information may be the capability of the supported number of EHR reports or the maximum number of EHR reports.

For example, the terminal capability information may be the capability of maximum number of carriers or number of terminal headroom reports supported by reporting of the power domain information. In the case where the power domain information reporting is reporting of EHR, the terminal capability information may be the capability of the supported number of EHR reports or the maximum number of EHR reports. In other words, for EHR reporting, the terminal capability information may be the capability of the supported number of EHR reports or the maximum number of EHR reports.

In some embodiments, in response to the terminal capability information being the capability of maximum number of carriers or number of terminal headroom reports supported by reporting of the power domain information, the terminal capability information further includes: in response to the reporting of the power domain information being reporting of PHR, the terminal capability information is the capability of the supported number of PHR reports or the maximum number of PHR reports; and in response to the reporting of the power domain information being reporting of EHR, the terminal capability information is the capability of the supported number of EHR reports or the maximum number of EHR reports.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, measuring and reporting on multiple downlink carriers includes: measuring and reporting the maximum number of downlink carriers supported by the terminal.

In some embodiments, measuring and reporting on multiple downlink carriers may include performing measurement and reporting for the maximum number of downlink carriers supported by the terminal.

For example, when the terminal capability information may include the capability of measuring and reporting on multiple downlink carriers supported by reporting of the power domain information, the terminal capability information may be a capability indicating the maximum number of downlink carriers that can be supported by reporting of the power domain information.

It can be understood that, through the terminal capability information, the network device can understand the maximum number of downlink carriers that the terminal can support.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the measurement mode includes at least one of the following modes: periodic measurement; aperiodic measurement.

In some embodiments, the measurement mode may include the periodic measurement.

For example, the power domain information reported by the terminal may be obtained through periodic measurement.

In some embodiments, the measurement mode may include the aperiodic measurement.

For example, the power domain information reported by the terminal may be obtained through aperiodic measurement.

In some embodiments, the measurement mode may include periodic measurement and aperiodic measurement.

For example, the power domain information reported by the terminal may be obtained through periodic measurement and aperiodic measurement. For example, the power domain information may be obtained through periodic measurement within certain durations, and the power domain information may be obtained through aperiodic measurement within other durations.

It can be understood that the specific power domain information measured in which durations and by which measurement mode can be determined according to corresponding signaling indications, pre-settings or protocol regulations, and is not limited in this disclosure.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the capability of supported enhanced power information type includes at least one of the following: capability of supported reporting based on media access control (MAC) control element (CE) signaling of an enhanced PHR; capability of supported reporting based on MAC CE signaling of newly defined power domain information, where the newly defined power domain information is different from power domain information of the PHR; capability of supported reporting based on MAC CE signaling of both the enhanced PHR and the newly defined power domain information; capability of supported reporting based on uplink control information (UCI) signaling; capability of supported reporting based on radio resource control (RRC) signaling.

In some embodiments, the capability of supported enhanced power information type may include the capability of supported reporting based on MAC CE signaling of enhanced PHR.

For example, the terminal capability information may indicate that the terminal supports reporting based on MAC CE signaling of enhanced PHR. In other words, the terminal supports using MAC CE signaling that carries enhanced PHR to carry power domain information. The power domain information is reported to the network device through the MAC CE signaling.

In some embodiments, the capability of supported enhanced power information type may include the capability of supported reporting based on MAC CE signaling of newly defined power domain information, where the newly defined power domain information is different from power domain information of the PHR.

For example, the terminal capability information may indicate that the terminal supports reporting based on MAC CE signaling of newly defined power domain information. In other words, the terminal supports using MAC CE signaling that carries the newly defined power domain information to carry the newly defined power domain information, and to report the newly defined power domain information to the network device through the MAC CE signaling. It can be understood that the newly defined power domain information is the power domain information mentioned above.

It should be noted that the power domain information and the newly defined power domain information in the present disclosure are the same concept and may be used interchangeably.

For example, the newly defined power domain information may be EHR.

In some embodiments, the capability of supported enhanced power information type may include the capability of supported reporting based on MAC CE signaling of both the enhanced PHR and the newly defined power domain information.

For example, the terminal capability information may indicate that the terminal supports reporting based on MAC CE signaling of both the enhanced PHR and the newly defined power domain information. That is, the terminal may simultaneously support the use of MAC CE signaling carrying enhanced PHR to carry power domain information; and support the use of MAC CE signaling carrying newly defined power domain information to carry newly defined power domain information. The power domain information is reported to the network device through MAC CE signaling carrying enhanced PHR and/or MAC CE signaling carrying the newly defined power domain information.

In some embodiments, the capability of supported enhanced power information type may include the capability of supported reporting based on UCI signaling.

For example, the terminal capability information may indicate that the terminal supports reporting based on UCI signaling. That is, the terminal supports using UCI signaling to carry power domain information, and reports the power domain information to the network device through the UCI signaling.

In some embodiments, the capability of supported enhanced power information type may include the capability of supported reporting based on RRC signaling.

For example, the terminal capability information may indicate that the terminal supports reporting based on RRC signaling. That is, the terminal supports using RRC signaling to carry power domain information, and reports the power domain information to the network device through the RRC signaling.

In some embodiments, the capability of supported enhanced power information type may also include any two or three of the above items. It is understandable that if the capability of supported enhanced power information type includes the capability of supported reporting based on MAC CE signaling of enhanced PHR and the capability of supported reporting based on MAC CE signaling of newly defined power domain information, then it can be equivalently considered that the capability of supported enhanced power information type includes the capability of supported reporting based on MAC CE signaling of both the enhanced PHR and the newly defined power domain information.

The capability of supported enhanced power information type may also include: the capability of supported reporting based on MAC CE signaling of enhanced PHR, and the capability of supported reporting based on UCI signaling; or the capability of supported reporting based on MAC CE signaling of enhanced PHR, and the capability of supported reporting based on RRC signaling; or the capability of supported reporting based on MAC CE signaling of enhanced EHR, and the capability of supported reporting based on UCI signaling; or the capability of supported reporting based on MAC CE signaling of enhanced EHR, and the capability of supported reporting based on RRC signaling; or the capability of supported reporting based on UCI signaling, and the capability of supported reporting based on RRC signaling; or the capability of supported reporting based on MAC CE signaling of both the enhanced PHR and the newly defined power domain information, and the capability of supported reporting based on UCI signaling; or the capability of supported reporting based on MAC CE signaling of both the enhanced PHR and the newly defined power domain information, and the capability of supported reporting based on RRC signaling; or the capability of supported reporting based on MAC CE signaling of enhanced PHR, the capability of supported reporting based on UCI signaling, and the capability of supported reporting based on RRC signaling; or the capability of supported reporting based on MAC CE signaling of newly defined power domain information, the capability of supported reporting based on UCI signaling, and the capability of supported reporting based on RRC signaling; or the capability of supported reporting based on MAC CE signaling of both the enhanced PHR and the newly defined power domain information, the capability of supported reporting based on UCI signaling, and the capability of supported reporting based on RRC signaling.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the method supports at least one of the following scenarios: a single carrier scenario; a multi-carrier scenario of CA/DC.

In some embodiments, the above method may support a single carrier scenario.

In some embodiments, the above method may support multi-carrier scenarios of CA/DC.

In some embodiments, the foregoing method can simultaneously support the single carrier scenario and the multi-carrier scenario supporting CA/DC.

The present disclosure can support reporting terminal capability information to the network device in a variety of different carrier scenarios, which is conducive for the network to achieve better scheduling more suitable for service transmission requirements, thereby improving the system throughput and user coverage, improving the system efficiency, reducing ineffective scheduling of the network device, and saving unnecessary power consumption for the terminal.

Based on the same concept, the present disclosure also provides a power information terminal capability reporting method applied to a network device.

FIG. 9 is a flow chart of another terminal capability reporting method according to an exemplary embodiment. As shown in FIG. 9, the method can be applied to a network device. The method may include the following steps.

In step S21, terminal capability information sent by a terminal is received.

In an embodiment, the network device may receive the terminal capability information sent by the terminal, where the terminal capability information is used for indicating the capability of the terminal to report power domain information, and the power domain information is used for indicating information related to terminal power based on SAR or MPE requirements.

The terminal may be a terminal applicable to R18.

In other words, the network device can receive the terminal capability of the enhanced terminal uplink power domain information reported by the terminal, so that the network device can timely and accurately understand whether different terminals have the capability of reporting the enhanced terminal uplink power domain information and/or what corresponding capabilities they have.

According to the present disclosure, by reporting the terminal capability information to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the terminal capability information includes at least one of the following: capability to enhance reporting of MPR information based on the SAR in FR1; capability to enhance reporting of MPR information based on the MPE in FR2; capability to enhance reporting of power class information change of the terminal; capability to report power headroom information within an uplink UL duty cycle; capability to report update of maxUplinkDutyCycle information; capability of maximum number of carriers or number of terminal headroom reports supported by reporting of the power domain information; capability of measuring and reporting on multiple downlink carriers supported by reporting of the power domain information; capability of a measurement mode corresponding to reporting of the power domain information; capability of an enhanced power information type supported by reporting of the power domain information.

In some embodiments, the terminal capability information may include the capability to enhance reporting of SAR-based MPR information in FR1.

For example, the terminal capability information may indicate the terminal's capability to perform enhanced reporting based on MPR information of SAR in FR1. It is understandable that through the terminal capability information, the network device can understand whether the terminal can perform enhanced reporting based on the MPR information of SAR in FR1.

It can be understood that the SAR-based MPR information may be SAR-based MPR power reduction value information, that is, information indicating the power reduction situation under the SAR requirement of FR1.

In some embodiments, the terminal capability information may include the capability to enhance reporting of MPE-based MPR information in FR2.

For example, the terminal capability information may indicate the terminal's capability of performing enhanced reporting based on MPR information of MPE in FR2. It is understandable that through the terminal capability information, the network device can understand whether the terminal can perform enhanced reporting based on the MPR information of MPE in FR2.

It can be understood that the MPE-based MPR information may be MPE-based MPR power reduction value information, that is, information indicating the power reduction situation under the MPE requirement of FR2.

In some embodiments, the terminal capability information may include the capability to enhance reporting of changes in power class information of the terminal.

For example, the terminal capability information may be the capability to enhance reporting of changes in power class information of the terminal. It can be understood that through the terminal capability information, the network device can understand whether the terminal can enhance reporting of changes in power class information of the terminal.

In some embodiments, the terminal capability information may include the capability to report power headroom information within a UL duty cycle.

For example, the terminal capability information may be the capability to report the power headroom information within the UL duty cycle. It can be understood that through the terminal capability information, the network device can understand whether the terminal can report the power headroom information within the UL duty cycle.

In some embodiments, the power headroom information within the UL duty cycle can be expressed as information related to the remaining power within the proportion of transmission symbols corresponding to the actual transmission UL duty cycle in the uplink evaluation period.

In some embodiments, the terminal capability information may include the capability to report update of the maxUplinkDutyCycle information.

For example, the terminal capability information may be the capability to report update of the maxUplinkDutyCycle information. It can be understood that, through the terminal capability information, the network device can understand whether the terminal can report update of the maxUplinkDutyCycle information.

In some embodiments, update of the maxUplinkDutyCycle information may be a change in the prediction or configuration of the UL duty cycle by the terminal. For example, the uplink evaluation period corresponding to the actual UL duty cycle within the uplink evaluation period may change. Alternatively, the proportion of uplink transmission symbols of the actual UL duty cycle within the uplink evaluation period may change.

In some embodiments, the terminal capability information may include the capability of maximum number of carriers or number of terminal headroom reports supported by reporting of the power domain information.

For example, the terminal capability information may be the capability of maximum number of carriers or number of terminal headroom reports supported by reporting of the power domain information. It can be understood that through the terminal capability information, the network device can understand the maximum number of carriers or the number of terminal headroom reports supported by the power domain information reported by the terminal.

In some embodiments, the terminal capability information may include the capability of measuring and reporting on multiple downlink carriers supported by reporting of the power domain information.

For example, the terminal capability information may be the capability of measuring and reporting on multiple downlink carriers supported by reporting of the power domain information. It can be understood that through the terminal capability information, the network device can understand whether the power domain information reported by the terminal supports measurement and reporting for multiple downlink carriers.

For example, some power domain information may support measurement and reporting for multiple downlink carriers, while other power domain information may not support measurement and reporting for multiple downlink carriers.

In some embodiments, the terminal capability information may include the capability of a measurement mode corresponding to reporting of the power domain information.

For example, the terminal capability information may be the capability of the measurement mode corresponding to reporting of the power domain information. It can be understood that, through the terminal capability information, the network device can understand which measurement mode(s) corresponds to the power domain information reported by the terminal.

In some embodiments, the terminal capability information may include the capability of an enhanced power information type supported by reporting of the power domain information.

For example, the terminal capability information may be the capability of the enhanced power information type supported by reporting of the power domain information. It can be understood that, through the terminal capability information, the network device can understand which enhanced power information type(s) is supported by the power domain information reported by the terminal.

In some embodiments, the terminal capability information may include any two, three, four, five, six, seven, eight or nine of the above items. For example, the terminal capability information may include the capability to enhance reporting of MPR information based on the SAR in FR1 and the capability to enhance reporting of MPR information based on the MPE in FR2; or the capability to enhance reporting of MPR information based on the SAR in FR1 and the capability to report power headroom information within the UL duty cycle; or the capability to enhance reporting of MPR information based on the SAR in FR1, the capability to enhance reporting of MPR information based on the MPE in FR2, and the capability of maximum number of carriers or number of terminal headroom reports supported by reporting of the power domain information; or the capability to enhance reporting of MPR information based on the SAR in FR1, the capability to enhance reporting of power class information change of the terminal, the capability of measuring and reporting on multiple downlink carriers supported by reporting of the power domain information, and the capability of the measurement mode corresponding to reporting of the power domain information; or the capability to enhance reporting of MPR information based on the SAR in FR1, the capability to enhance reporting of power class information change of the terminal, the capability to report update of maxUplinkDutyCycle information, the capability of maximum number of carriers or number of terminal headroom reports supported by reporting of the power domain information, and the capability of the enhanced power information type supported by reporting of the power domain information; or the capability to enhance reporting of MPR information based on the SAR in FR1, the capability to enhance reporting of MPR information based on the MPE in FR2, the capability to enhance reporting of power class information change of the terminal, the capability to report power headroom information within the UL duty cycle, the capability of maximum number of carriers or number of terminal headroom reports supported by reporting of the power domain information, and the capability of the enhanced power information type supported by reporting of the power domain information; or the capability to enhance reporting of MPR information based on the SAR in FR1, the capability to enhance reporting of MPR information based on the MPE in FR2, the capability to report power headroom information within the UL duty cycle, the capability to report update of maxUplinkDutyCycle information, the capability of maximum number of carriers or number of terminal headroom reports supported by reporting of the power domain information, the capability of measuring and reporting on multiple downlink carriers supported by reporting of the power domain information, and the capability of the enhanced power information type supported by reporting of the power domain information; or the capability to enhance reporting of MPR information based on the SAR in FR1, the capability to enhance reporting of MPR information based on the MPE in FR2, the capability to enhance reporting of power class information change of the terminal, the capability to report power headroom information within the UL duty cycle, the capability to report update of maxUplinkDutyCycle information, the capability of maximum number of carriers or number of terminal headroom reports supported by reporting of the power domain information, the capability of measuring and reporting on multiple downlink carriers supported by reporting of the power domain information, and the capability of the enhanced power information type supported by reporting of the power domain information; or the capability to enhance reporting of MPR information based on the SAR in FR1, the capability to enhance reporting of MPR information based on the MPE in FR2, the capability to enhance reporting of power class information change of the terminal, the capability to report power headroom information within the UL duty cycle, the capability to report update of maxUplinkDutyCycle information, the capability of maximum number of carriers or number of terminal headroom reports supported by reporting of the power domain information, the capability of measuring and reporting on multiple downlink carriers supported by reporting of the power domain information, the capability of the measurement mode corresponding to reporting of the power domain information, and the capability of the enhanced power information type supported by reporting of the power domain information.

It is understandable that the terminal capability information may also include any two, three, four, five, six, seven or eight of the above items, which are not listed one by one in the present disclosure. For the convenience of description, the present disclosure will not elaborate on them here.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, in response to the terminal capability information being the capability of maximum number of carriers or number of terminal headroom reports supported by reporting of the power domain information, the terminal capability information also includes at least one of the following: in response to the reporting of the power domain information being reporting of PHR, the terminal capability information is capability of a supported number of PHR reports or a maximum number of PHR reports; and in response to the reporting of the power domain information being reporting of EHR, the terminal capability information is capability of a supported number of EHR reports or a maximum number of EHR reports.

In some embodiments, in response to the terminal capability information being the capability of maximum number of carriers or number of terminal headroom reports supported by reporting of the power domain information, and in response to the reporting of the power domain information being reporting of PHR, the terminal capability information is the capability of the supported number of PHR reports or the maximum number of PHR reports.

For example, the terminal capability information may be the capability of maximum number of carriers or number of terminal headroom reports supported by reporting of the power domain information. In the case where the reporting of the power domain information is reporting of PHR, the terminal capability information may be the capability of the supported number of PHR reports or the maximum number of PHR reports. In other words, for PHR reporting, the terminal capability information may be the capability of the supported number of PHR reports or the maximum number of PHR reports.

In some embodiments, in response to the terminal capability information being the capability of maximum number of carriers or number of terminal headroom reports supported by reporting of the power domain information, and in response to the reporting of the power domain information being reporting of EHR, the terminal capability information may be the capability of the supported number of EHR reports or the maximum number of EHR reports.

For example, the terminal capability information may be the capability of maximum number of carriers or number of terminal headroom reports supported by reporting of the power domain information. In the case where the power domain information reporting is reporting of EHR, the terminal capability information may be the capability of the supported number of EHR reports or the maximum number of EHR reports. In other words, for EHR reporting, the terminal capability information may be the capability of the supported number of EHR reports or the maximum number of EHR reports.

In some embodiments, in response to the terminal capability information being the capability of maximum number of carriers or number of terminal headroom reports supported by reporting of the power domain information, the terminal capability information further includes: in response to the reporting of the power domain information being reporting of PHR, the terminal capability information is the capability of the supported number of PHR reports or the maximum number of PHR reports; and in response to the reporting of the power domain information being reporting of EHR, the terminal capability information is the capability of the supported number of EHR reports or the maximum number of EHR reports.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, measuring and reporting on multiple downlink carriers includes: measuring and reporting the maximum number of downlink carriers supported by the terminal.

In some embodiments, measuring and reporting on multiple downlink carriers may include performing measurement and reporting for the maximum number of downlink carriers supported by the terminal.

For example, when the terminal capability information may include the capability of measuring and reporting on multiple downlink carriers supported by reporting of the power domain information, the terminal capability information may be a capability indicating the maximum number of downlink carriers that can be supported by reporting of the power domain information.

It can be understood that, through the terminal capability information, the network device can understand the maximum number of downlink carriers that the terminal can support.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the measurement mode includes at least one of the following modes: periodic measurement; aperiodic measurement.

In some embodiments, the measurement mode may include the periodic measurement.

For example, the power domain information reported by the terminal may be obtained through periodic measurement.

In some embodiments, the measurement mode may include the aperiodic measurement.

For example, the power domain information reported by the terminal may be obtained through aperiodic measurement.

In some embodiments, the measurement mode may include periodic measurement and aperiodic measurement.

In some embodiments, the measurement mode may include periodic measurement and aperiodic measurement.

For example, the power domain information reported by the terminal may be obtained through periodic measurement and aperiodic measurement. For example, the power domain information may be obtained through periodic measurement within certain durations, and the power domain information may be obtained through aperiodic measurement within other durations.

It can be understood that the specific power domain information measured in which durations and by which measurement mode can be determined according to corresponding signaling indications, pre-settings or protocol regulations, and is not limited in this disclosure.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the capability of supported enhanced power information type includes at least one of the following: capability of supported reporting based on MAC CE signaling of an enhanced PHR; capability of supported reporting based on MAC CE signaling of newly defined power domain information, where the newly defined power domain information is different from power domain information of the PHR; capability of supported reporting based on MAC CE signaling of both the enhanced PHR and the newly defined power domain information; capability of supported reporting based on UCI signaling; capability of supported reporting based on RRC signaling.

In some embodiments, the capability of supported enhanced power information type may include the capability of supported reporting based on MAC CE signaling of enhanced PHR.

For example, the terminal capability information may indicate that the terminal supports reporting based on MAC CE signaling of enhanced PHR. In other words, the terminal supports using MAC CE signaling that carries enhanced PHR to carry power domain information. The power domain information is reported to the network device through the MAC CE signaling.

In some embodiments, the capability of supported enhanced power information type may include the capability of supported reporting based on MAC CE signaling of newly defined power domain information, where the newly defined power domain information is different from power domain information of the PHR.

For example, the terminal capability information may indicate that the terminal supports reporting based on MAC CE signaling of newly defined power domain information. In other words, the terminal supports using MAC CE signaling that carries the newly defined power domain information to carry the newly defined power domain information, and to report the newly defined power domain information to the network device through the MAC CE signaling. It can be understood that the newly defined power domain information is the power domain information mentioned above.

It should be noted that the power domain information and the newly defined power domain information in the present disclosure are the same concept and may be used interchangeably.

For example, the newly defined power domain information may be EHR.

In some embodiments, the capability of supported enhanced power information type may include the capability of supported reporting based on MAC CE signaling of both the enhanced PHR and the newly defined power domain information.

For example, the terminal capability information may indicate that the terminal supports reporting based on MAC CE signaling of both the enhanced PHR and the newly defined power domain information. That is, the terminal may simultaneously support the use of MAC CE signaling carrying enhanced PHR to carry power domain information; and support the use of MAC CE signaling carrying newly defined power domain information to carry newly defined power domain information. The power domain information is reported to the network device through MAC CE signaling carrying enhanced PHR and/or MAC CE signaling carrying the newly defined power domain information.

In some embodiments, the capability of supported enhanced power information type may include the capability of supported reporting based on UCI signaling.

For example, the terminal capability information may indicate that the terminal supports reporting based on UCI signaling. That is, the terminal supports using UCI signaling to carry power domain information, and reports the power domain information to the network device through the UCI signaling.

In some embodiments, the capability of supported enhanced power information type may include the capability of supported reporting based on RRC signaling.

For example, the terminal capability information may indicate that the terminal supports reporting based on RRC signaling. That is, the terminal supports using RRC signaling to carry power domain information, and reports the power domain information to the network device through the RRC signaling.

In some embodiments, the capability of supported enhanced power information type may also include any two or three of the above items. It is understandable that if the capability of supported enhanced power information type includes the capability of supported reporting based on MAC CE signaling of enhanced PHR and the capability of supported reporting based on MAC CE signaling of newly defined power domain information, then it can be equivalently considered that the capability of supported enhanced power information type includes the capability of supported reporting based on MAC CE signaling of both the enhanced PHR and the newly defined power domain information.

The capability of supported enhanced power information type may also include: the capability of supported reporting based on MAC CE signaling of enhanced PHR, and the capability of supported reporting based on UCI signaling; or the capability of supported reporting based on MAC CE signaling of enhanced PHR, and the capability of supported reporting based on RRC signaling; or the capability of supported reporting based on MAC CE signaling of enhanced EHR, and the capability of supported reporting based on UCI signaling; or the capability of supported reporting based on MAC CE signaling of enhanced EHR, and the capability of supported reporting based on RRC signaling; or the capability of supported reporting based on UCI signaling, and the capability of supported reporting based on RRC signaling; or the capability of supported reporting based on MAC CE signaling of both the enhanced PHR and the newly defined power domain information, and the capability of supported reporting based on UCI signaling; or the capability of supported reporting based on MAC CE signaling of both the enhanced PHR and the newly defined power domain information, and the capability of supported reporting based on RRC signaling; or the capability of supported reporting based on MAC CE signaling of enhanced PHR, the capability of supported reporting based on UCI signaling, and the capability of supported reporting based on RRC signaling; or the capability of supported reporting based on MAC CE signaling of newly defined power domain information, the capability of supported reporting based on UCI signaling, and the capability of supported reporting based on RRC signaling; or the capability of supported reporting based on MAC CE signaling of both the enhanced PHR and the newly defined power domain information, the capability of supported reporting based on UCI signaling, and the capability of supported reporting based on RRC signaling.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the method supports at least one of the following scenarios: a single carrier scenario; a multi-carrier scenario of CA/DC.

In some embodiments, the above method may support a single carrier scenario.

In some embodiments, the above method may support multi-carrier scenarios of CA/DC.

In some embodiments, the foregoing method can simultaneously support the single carrier scenario and the multi-carrier scenario supporting CA/DC.

The present disclosure can support reporting terminal capability information to the network device in a variety of different carrier scenarios, which is conducive for the network to achieve better scheduling more suitable for service transmission requirements, thereby improving the system throughput and user coverage, improving the system efficiency, reducing ineffective scheduling of the network device, and saving unnecessary power consumption for the terminal.

It should be noted that those skilled in the art can understand that the various implementation methods/embodiments involved in the embodiments of the present disclosure can be used in conjunction with the aforementioned embodiments or can be used independently. Whether used alone or in conjunction with the aforementioned embodiments, the implementation principle is similar. In the implementation of the present disclosure, some embodiments are described in terms of implementation methods used together. Alternatively, those skilled in the art can understand that such examples are not limitations of the embodiments of the present disclosure.

Based on the same concept, embodiments of the present disclosure also provide a terminal capability reporting apparatus and device.

It is understandable that the power information terminal capability reporting apparatus and device according to some embodiments of the present disclosure include hardware structures and/or software modules corresponding to the execution of each function in order to realize the above functions. In combination with the units and algorithm steps of each example disclosed in the embodiments of the present disclosure, the embodiments of the present disclosure can be implemented in the form of hardware or a combination of hardware and computer software. Whether a function is executed in the form of hardware or computer software driving hardware depends on the specific application and design constraints of the technical solution. Those skilled in the art may use different methods to implement the described functions for each specific application, but such implementation should not be considered to exceed the scope of the technical solution according to the embodiments of the present disclosure.

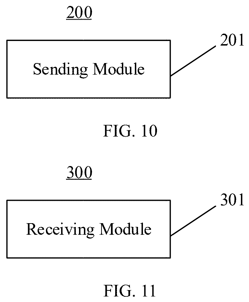

FIG. 10 is a schematic diagram of a terminal capability reporting apparatus according to an exemplary embodiment. Referring to FIG. 10, the apparatus 200 is configured in the terminal, and the apparatus 200 includes: a sending module 201, which is configured to send terminal capability information to a network device, where the terminal capability information is used for indicating the capability of the terminal to report power domain information, and the power domain information is used for indicating information related to terminal power based on SAR or MPE requirements.

According to the present disclosure, by reporting the terminal capability information to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the terminal capability information includes at least one of the following: capability to enhance reporting of MPR information based on the SAR in FR1; capability to enhance reporting of MPR information based on the MPE in FR2; capability to enhance reporting of power class information change of the terminal; capability to report power headroom information within an uplink UL duty cycle; capability to report update of maxUplinkDutyCycle information; capability of maximum number of carriers or number of terminal headroom reports supported by reporting of the power domain information; capability of measuring and reporting on multiple downlink carriers supported by reporting of the power domain information; capability of a measurement mode corresponding to reporting of the power domain information; capability of an enhanced power information type supported by reporting of the power domain information.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some embodiments, in response to the terminal capability information being the capability of maximum number of carriers or number of terminal headroom reports supported by reporting of the power domain information, the terminal capability information also includes at least one of the following: in response to the reporting of the power domain information being reporting of PHR, the terminal capability information is capability of a supported number of PHR reports or a maximum number of PHR reports; and in response to the reporting of the power domain information being reporting of EHR, the terminal capability information is capability of a supported number of EHR reports or a maximum number of EHR reports.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some implementations, measuring and reporting on multiple downlink carriers includes: measuring and reporting the maximum number of downlink carriers supported by the terminal.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some embodiments, the measurement mode includes at least one of the following modes: periodic measurement; aperiodic measurement.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some embodiments, the capability of supported enhanced power information type includes at least one of the following: capability of supported reporting based on MAC CE signaling of an enhanced PHR; capability of supported reporting based on MAC CE signaling of newly defined power domain information, where the newly defined power domain information is different from power domain information of the PHR; capability of supported reporting based on MAC CE signaling of both the enhanced PHR and the newly defined power domain information; capability of supported reporting based on UCI signaling; capability of supported reporting based on RRC signaling.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some embodiments, the method supports at least one of the following scenarios: a single carrier scenario; a multi-carrier scenario of CA/DC.

The present disclosure can support reporting terminal capability information to the network device in a variety of different carrier scenarios, which is conducive for the network to achieve better scheduling more suitable for service transmission requirements, thereby improving the system throughput and user coverage, improving the system efficiency, reducing ineffective scheduling of the network device, and saving unnecessary power consumption for the terminal.

FIG. 11 is a schematic diagram of another terminal capability reporting apparatus according to an exemplary embodiment. Referring to FIG. 11, the apparatus 300 is configured in a network device, and the apparatus 300 includes: a receiving module 301, which is configured to receive terminal capability information sent by a terminal, where the terminal capability information is used for indicating the capability of the terminal to report power domain information, and the power domain information is used for indicating information related to terminal power based on SAR or MPE requirements.

According to the present disclosure, by reporting the terminal capability information to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In the power information terminal capability reporting method according to some embodiments of the present disclosure, the terminal capability information includes at least one of the following: capability to enhance reporting of MPR information based on the SAR in FR1; capability to enhance reporting of MPR information based on the MPE in FR2; capability to enhance reporting of power class information change of the terminal; capability to report power headroom information within an uplink UL duty cycle; capability to report update of maxUplinkDutyCycle information; capability of maximum number of carriers or number of terminal headroom reports supported by reporting of the power domain information; capability of measuring and reporting on multiple downlink carriers supported by reporting of the power domain information; capability of a measurement mode corresponding to reporting of the power domain information; capability of an enhanced power information type supported by reporting of the power domain information.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some embodiments, in response to the terminal capability information being the capability of maximum number of carriers or number of terminal headroom reports supported by reporting of the power domain information, the terminal capability information also includes at least one of the following: in response to the reporting of the power domain information being reporting of PHR, the terminal capability information is capability of a supported number of PHR reports or a maximum number of PHR reports; and in response to the reporting of the power domain information being reporting of EHR, the terminal capability information is capability of a supported number of EHR reports or a maximum number of EHR reports.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some implementations, measuring and reporting on multiple downlink carriers includes: measuring and reporting the maximum number of downlink carriers supported by the terminal.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some embodiments, the measurement mode includes at least one of the following modes: periodic measurement; aperiodic measurement.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some embodiments, the capability of supported enhanced power information type includes at least one of the following: capability of supported reporting based on MAC CE signaling of an enhanced PHR; capability of supported reporting based on MAC CE signaling of newly defined power domain information, where the newly defined power domain information is different from power domain information of the PHR; capability of supported reporting based on MAC CE signaling of both the enhanced PHR and the newly defined power domain information; capability of supported reporting based on UCI signaling; capability of supported reporting based on RRC signaling.

The present disclosure provides a variety of terminal capability information, so that when the terminal capability information is reported to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

In some embodiments, the method supports at least one of the following scenarios: a single carrier scenario; a multi-carrier scenario of CA/DC.

The present disclosure can support reporting terminal capability information to the network device in a variety of different carrier scenarios, which is conducive for the network to achieve better scheduling more suitable for service transmission requirements, thereby improving the system throughput and user coverage, improving the system efficiency, reducing ineffective scheduling of the network device, and saving unnecessary power consumption for the terminal.

It should be noted that the various modules/units involved in the apparatus 200 and the apparatus 300 involved in the embodiments of the present disclosure are only for illustrative purposes and are not intended to be limiting. For example, the apparatus 200 in the embodiments of the present disclosure may also include a receiving module and/or a processing module. For another example, the apparatus 300 in the embodiments of the present disclosure may also include a sending module and/or a processing module. The various modules included in the apparatus 200 and the apparatus 300 may interact with each other and may also interact with other network element devices.

Regarding the apparatuses in the above embodiments, the specific manner in which each module performs operations has been described in detail in the embodiments of the method, and will not be elaborated here.

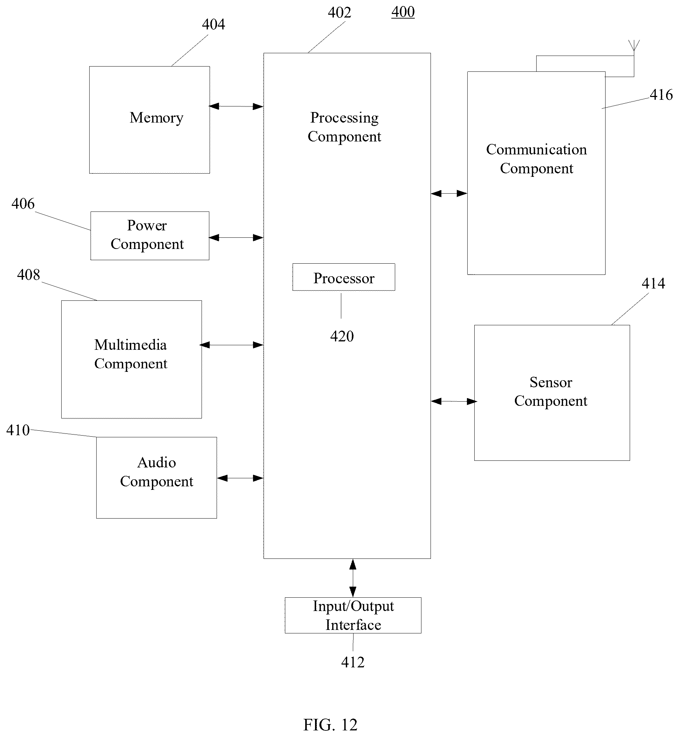

FIG. 12 is a schematic diagram of a terminal capability reporting device according to an exemplary embodiment. For example, the device 400 may be a mobile phone, a computer, a digital broadcast terminal, a messaging device, a game console, a tablet device, a medical device, a fitness device, a personal digital assistant, or the like.

Referring to FIG. 12, the device 400 may include one or more of the following components: a processing component 402, a memory 404, a power component 406, a multimedia component 408, an audio component 410, an input/output (I/O) interface 412, a sensor component 414, and a communication component 416.

The processing component 402 generally controls the overall operation of the device 400, such as operations associated with display, phone calls, data communications, camera operations, and recording operations. The processing component 402 may include one or more processors 420 to execute instructions to complete all or part of the steps of the method as described above. In addition, the processing component 402 may include one or more modules to facilitate the interaction between the processing component 402 and other components. For example, the processing component 402 may include a multimedia module to facilitate the interaction between the multimedia component 408 and the processing component 402.

The memory 404 is configured to store various types of data to support operations on the device 400. Examples of such data include instructions for any application or method operating on the device 400, contact data, phone book data, messages, pictures, videos, and the like. The memory 404 can be implemented by any type of volatile or nonvolatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 406 provides power to the various components of the device 400. The power component 406 may include a power management system, one or more power supplies, and other components associated with generating, managing, and distributing power for the device 400.

The multimedia component 408 includes a screen that provides an output interface between the device 400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 408 includes a front camera and/or a rear camera. When the device 400 is in an operating mode, such as a shooting mode or a video mode, the front camera and/or the rear camera may receive external multimedia data. Each front camera and the rear camera may be a fixed optical lens system or have a focal length and optical zoom capability.

The audio component 410 is configured to output and/or input audio signals. For example, the audio component 410 includes a microphone (MIC), and when the device 400 is in an operating mode, such as a call mode, a recording mode, and a speech recognition mode, the microphone is configured to receive an external audio signal. The received audio signal can be further stored in the memory 404 or sent via the communication component 416. In some embodiments, the audio component 410 also includes a speaker for outputting audio signals.

Input/output interface 412 provides an interface between processing component 402 and peripheral interface modules, such as keyboards, click wheels, buttons, and the like. These buttons may include, but are not limited to, a home button, a volume button, a start button, and a lock button.

The sensor component 414 includes one or more sensors for providing various aspects of status assessment for the device 400. For example, the sensor component 414 can detect the turn-on/-off state of the device 400, the relative positioning of components, such as the display and keypad of the device 400. The sensor component 414 can also detect the position change of the device 400 or a component of the device 400, the presence or absence of user contact with the device 400, the orientation or acceleration/deceleration of the device 400, and the temperature change of the device 400. The sensor component 414 may include a proximity sensor configured to detect the presence of nearby objects without any physical contact. The sensor component 414 may also include an optical sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate wired or wireless communication between the device 400 and other devices. The device 400 can access a wireless network based on a communication standard, such as WiFi, 2G, 3G, or a combination thereof. In an exemplary embodiment, the communication component 416 receives a broadcast signal or broadcast-related information from an external broadcast management system via a broadcast channel. In an exemplary embodiment, the communication component 416 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 400 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the method as described above.

In an exemplary embodiment, a non-transitory computer-readable storage medium including instructions is also provided, such as the memory 404 including instructions, where the instructions can be executed by the processor 420 of the device 400 to perform the methods as described above. For example, the non-transitory computer-readable storage medium can be a ROM, a random access memory (RAM), a CD-ROM, a magnetic tape, a floppy disk, an optical data storage device, or the like.

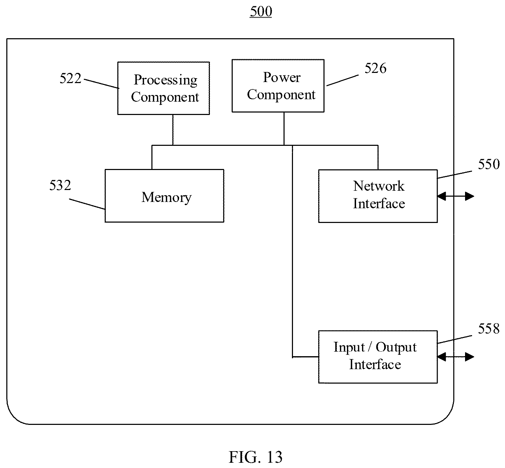

FIG. 13 is a schematic diagram of another terminal capability reporting device according to an exemplary embodiment. For example, the device 500 may be provided as a base station, or a server. Referring to FIG. 13, the device 500 includes a processing component 522, which further includes one or more processors, and a memory resource represented by a memory 532 for storing instructions executable by the processing component 522, such as an application program. The application program stored in the memory 532 may include one or more modules, each corresponding to a set of instructions. In addition, the processing component 522 is configured to execute instructions to perform the above method.

The device 500 may also include a power component 526 configured to perform power management of the device 500, a wired or wireless network interface 550 configured to connect the device 500 to a network, and an input/output (I/O) interface 558. The device 500 may operate based on an operating system stored in the memory 532, such as Windows Server^{™}, Mac OS X^{™}, Unix^{™}, Linux^{™}, FreeBSD^{™}, or the like.

According to the present disclosure, by reporting the terminal capability information to the network device, the network can achieve better scheduling which is more suitable for service transmission requirements, thereby improving the system throughput and user coverage, improving the system efficiency, reducing ineffective scheduling of the network device, and saving unnecessary power consumption for the terminal.

It can be further understood that in the present disclosure, "multiple/plurality of" refers to two or more than two, and other quantifiers are similar thereto. "And/or" describes the association relationship of associated objects, indicating that three relationships may exist. For example, A and/or B may represent: A exists alone, both A and B exist, and B exists alone. The character "/" generally indicates that the associated objects before and after are in an "or" relationship. The singular forms "a", "the", and "said" are also intended to include plural forms, unless the context clearly indicates other meanings.

It can be further understood that the terms "first", "second", and the like are used to describe various information, but such information should not be limited to these terms. These terms are only used to distinguish the same type of information from each other, and do not indicate a specific order or degree of importance. In fact, the expressions "first", "second", and the like can be used interchangeably. For example, without departing from the scope of the present disclosure, the first information can also be referred to as the second information, and similarly, the second information can also be referred to as the first information.

It can be further understood that the meanings of the words "in response to" and "if" involved in the present disclosure depend on the context and the actual usage scenario. For example, the word "in response to" used herein can be interpreted as "at..." or "when..." or "if" or "in case".

It can be further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other embodiments of the present disclosure after considering the specification and practicing the invention disclosed herein. This application is intended to cover any modifications, uses or adaptations of the present disclosure, which follow the general principles of the present disclosure and include common knowledge or customary technical means in the art that are not disclosed in the present disclosure.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

## Claims

1. A method for reporting terminal capability, applied to a terminal, comprising:
sending terminal capability information to a network device, wherein the terminal capability information is used for indicating capability of the terminal to report power domain information, and the power domain information is used for indicating information related to terminal power based on requirement of specific absorption rate SAR or maximum power exposure MPE.

2. The method according to claim 1, wherein the terminal capability information comprises at least one of following:
capability to enhance reporting of maximum power reduction MPR information based on the SAR in a frequency range FR1;
capability to enhance reporting of MPR information based on the MPE in a frequency range FR2;
capability to enhance reporting of power class information change of the terminal;
capability to report power headroom information within an uplink UL duty cycle;
capability to report update of maximum UL duty cycle maxUplinkDutyCycle information;
capability of maximum number of carriers or number of terminal headroom reports supported by reporting of the power domain information;
capability of measuring and reporting on multiple downlink carriers supported by reporting of the power domain information;
capability of a measurement mode corresponding to reporting of the power domain information;
capability of an enhanced power information type supported by reporting of the power domain information.

3. The method according to claim 2, wherein, in response to the terminal capability information being the capability of maximum number of carriers or number of terminal headroom reports supported by reporting of the power domain information, the terminal capability information further comprises at least one of following:
in response to the reporting of the power domain information being reporting of a power headroom report PHR, the terminal capability information is capability of a supported number of PHR reports or a maximum number of PHR reports;
in response to the reporting of the power domain information being reporting of an energy headroom report EHR, the terminal capability information is capability of a supported number of EHR reports or a maximum number of EHR reports.

4. The method according to claim 2, wherein the measuring and reporting on multiple downlink carriers comprises:
measuring and reporting on a maximum number of downlink carriers supported by the terminal.

5. The method according to claim 2, wherein the measurement mode comprises at least one mode of following:
periodic measurement;
aperiodic measurement.

6. The method according to claim 2, wherein the capability of the supported enhanced power information type comprises at least one of following:
capability of supported reporting based on media access control element MAC CE signaling of an enhanced PHR;
capability of supported reporting based on MAC CE signaling of newly defined power domain information, wherein the newly defined power domain information is different from power domain information of the PHR;
capability of supported reporting based on MAC CE signaling of both the enhanced PHR and the newly defined power domain information;
capability of supported reporting based on uplink control information UCI signaling;
capability of supported reporting based on radio resource control RRC signaling.

7. The method according to any one of claims 1 to 6, wherein the method supports at least one scenario of following:
single carrier scenario;
multi-carrier scenario of carrier aggregation CA/dual connectivity DC.

8. A method for reporting terminal capability, applied to a network device, comprising:
receiving terminal capability information sent by a terminal, wherein the terminal capability information is used for indicating capability of the terminal to report power domain information, and the power domain information is used for indicating information related to terminal power based on requirement of specific absorption rate SAR or maximum power exposure MPE.

9. The method according to claim 8, wherein the terminal capability information comprises at least one of following:
capability to enhance reporting of maximum power reduction MPR information based on the SAR in a frequency range FR1;
capability to enhance reporting of MPR information based on the MPE in a frequency range FR2;
capability to enhance reporting of power class information change of the terminal;
capability to report power headroom information within an uplink UL duty cycle;
capability to report update of maximum UL duty cycle maxUplinkDutyCycle information;
capability of maximum number of carriers or number of terminal headroom reports supported by reporting of the power domain information;
capability of measuring and reporting on multiple downlink carriers supported by reporting of the power domain information;
capability of a measurement mode corresponding to reporting of the power domain information;
capability of an enhanced power information type supported by reporting of the power domain information.

10. The method according to claim 9, wherein, in response to the terminal capability information being the capability of maximum number of carriers or number of terminal headroom reports supported by reporting of the power domain information, the terminal capability information further comprises at least one of following:
in response to the reporting of the power domain information being reporting of a power headroom report PHR, the terminal capability information is capability of a supported number of PHR reports or a maximum number of PHR reports;
in response to the reporting of the power domain information being reporting of an energy headroom report EHR, the terminal capability information is capability of a supported number of EHR reports or a maximum number of EHR reports.

11. The method according to claim 9, wherein the measuring and reporting on multiple downlink carriers comprises:
measuring and reporting on a maximum number of downlink carriers supported by the terminal.

12. The method according to claim 9, wherein the measurement mode comprises at least one mode of following:
periodic measurement;
aperiodic measurement.

13. The method according to claim 9, wherein the capability of the supported enhanced power information type comprises at least one of following:
capability of supported reporting based on media access control element MAC CE signaling of an enhanced PHR;
capability of supported reporting based on MAC CE signaling of newly defined power domain information, wherein the newly defined power domain information is different from power domain information of the PHR;
capability of supported reporting based on MAC CE signaling of both the enhanced PHR and the newly defined power domain information;
capability of supported reporting based on uplink control information UCI signaling;
capability of supported reporting based on radio resource control RRC signaling.

14. The method according to any one of claims 8 to 13, wherein the method supports at least one scenario of following:
single carrier scenario;
multi-carrier scenario of carrier aggregation CA/dual connectivity DC.

15. An apparatus for reporting terminal capability, configured at a terminal, comprising:
a sending module, configured to send terminal capability information to a network device, wherein the terminal capability information is used for indicating capability of the terminal to report power domain information, and the power domain information is used for indicating information related to terminal power based on requirement of specific absorption rate SAR or maximum power exposure MPE.

16. An apparatus for reporting terminal capability, configured at a network device, comprising:
a receiving module, configured to receive terminal capability information sent by a terminal, wherein the terminal capability information is used for indicating capability of the terminal to report power domain information, and the power domain information is used for indicating information related to terminal power based on requirement of specific absorption rate SAR or maximum power exposure MPE.

17. A device for reporting terminal capability, comprising:
a processor; and
a memory configured to store instructions executable by the processor;
wherein the processor is configured to implement the method according to any one of claims 1 to 7.

18. A device for reporting terminal capability, comprising:
a processor; and
a memory configured to store instructions executable by the processor;
wherein the processor is configured to implement the method according to any one of claims 8 to 14.

19. A non-transitory computer readable storage medium, wherein instructions in the storage medium, upon being executed by a processor of a terminal, cause the terminal to implement the method according to any one of claims 1 to 7.

20. A non-transitory computer readable storage medium, wherein instructions in the storage medium, upon being executed by a processor of a network device, cause the network device to implement the method according to any one of claims 8 to 14.
